# EUROPÄISCHE PATENTSCHRIFT

(11) **EP 0 509 972 B1**
(45) Veröffentlichungstag und Bekanntmachung des Hinweises auf die Patenterteilung: **19.10.1994**
(21) Anmeldenummer: 92830207.4
(22) Anmeldetag: 06.05.1992
(51) Int. Cl.: B27F 1/00, B23Q 7/04

(54) **Ladevorrichtung für Zapfenschneidemaschinen und ähnliche Maschinen**
Loading device for tenoning device and similar machines
Dispositif de chargement pour tenonneux et machines similaires

(30) Priorität: 06.05.1991 IT FI910101
(43) Veröffentlichungstag der Anmeldung: 21.10.1992
(73) Patentinhaber: DITTA BACCI PAOLINO DI GIUSEPPE BACCI DI AGOSTINO BACCI, I-56021 Cascina, Pisa (IT)
(72) Erfinder: Ruggieri, Alberto, I-56025 Pontedera, Pisa (IT)
(74) Vertreter: Mannucci, Michele

(56) Entgegenhaltungen:
- EP-A- 0 066 318
- US-A- 3 997 067
- US-A- 4 845 826
- Prospekt der TSD/CSF Abrundzapfenschneidemaschine

## Beschreibung

Die Erfindung betrifft eine Vorrichtung zum Laden von zu bearbeitenden Werkstücken in eine Zapfenschneidemaschine und zum Entladen der bearbeiteten Werkstücke aus der Maschine, wobei die Vorrichtung folgende Teile aufweist: ein Magazin für zu bearbeitende Werkstücke, Mittel zum Entnehmen eines Werkstücks aus dem Magazin und zum Überführen des Werkstücks auf eine Unterstützungsebene für die Bearbeitung des Werkstücks, Mittel zum Einspannen des Werkstücks während der Bearbeitung sowie Mittel zum Entladen des bearbeiteten Werkstücks.

Bekannte Vorrichtungen dieser Art (wie die von der Anmelderin hergestellte unter der Bezeichnung TSD/CSF vertriebene Abrundzapfenschneidemaschine) verfügen über zwei im wesentlichen symmetrische Beladerhälften mit jeweils einer Kette, an der ein Schlitten angebracht ist, der das zu bearbeitende Werkstück aus dem Magazin entnimmt und der Bearbeitungszone zuführt. Diese Zuführung erfolgt auf einer Bewegungsbahn, die aus zwei geradlinigen Abschnitten besteht, die über einen gekrümmten Abschnitt mit kleinem Krümmungsradius miteinander verbunden sind. Der erste geradlinige Abschnitt ist gegenüber der Horizontalen geneigt, während der zweite geradlinige Abschnitt horizontal und parallel zu der Ebene verläuft, auf der das Werkstück während der Bearbeitung aufliegt. In der Bearbeitungszone befinden sich Einspannmittel mit von einem pneumatischen Betätigungsglied betätigten Spannelementen, die von oben nach unten wirken, um das Werkstück gegen einen unteren Anschlag einzuspannen. Die Einspannmittel beschränken durch ihren großen Raumbedarf, mit dem sie über das Profil des Werkstücks hinausragen, die mögliche Verschwenkung des Arbeitskopfs der Zapfenschneidemaschine um seine senkrechte Achse. Dadurch wird die Neigung der Zapfen, die mit der Maschine bearbeitet werden können, eingeschränkt bzw. es ist nicht möglich, Werkstücke, die kleine Abmessungen haben, mit großen Verschwenkungen (Größenordnung 45°) der Arbeitsköpfe zu bearbeiten.

Außerdem hat das Vorhandensein eines unteren Anschlags, gegen den das Werkstück von dem oberen Spannelement eingespannt wird, zur Folge, daß die Bewegungsbahn der Mittel für die Überführung des Werkstücks nicht optimal ist. Um zu verhindern, daß bei der Überführung des Werkstücks von dem Belader zu der Arbeitszone der untere Anschlag für das Werkstück und das Werkstück selbst einander im Wege sind, muß nämlich der letzte Abschnitt der Bewegungsbahn für die Überführung des Werkstücks geradlinig sein und parallel zu der von dem Anschlag bestimmten Unterstützungsebene verlaufen. Deshalb muß das Werkstück längs des Zuführungswegs abrupt beschleunigt werden, was mit der Gefahr verbunden ist, daß es aus den Entnahme- und Überführungsmitteln herausfällt. Es wäre umgekehrt notwendig, das Magazin für die Werkstücke mit starker Neigung gegenüber der Horizontalen anzuordnen, damit die Werkstücke der Arbeitszone zugeführt werden können, ohne daß der untere Anschlag ihnen im Wege steht.

Außerdem läßt sich bei bekannten Vorrichtungen das Werkstück nur durch Einwirkung von oben gegen eine feste Unterstützungsebene einspannen. Dies bedeutet, daß jedes Werkstück auf seiner Unterseite eine Referenzfläche haben muß, d.h. eine Fläche, auf die alle von der Zapfenschneidemaschine oder einer ähnlichen Maschine ausgeführten Bearbeitungen bezogen werden. Für viele Anwendungen bedeutet dies eine Einschränkung, da es günstiger wäre, als Referenz für das Werkstück eine obere Fläche anstelle einer unteren Fläche zur Verfügung zu haben.

Ein erstes Ziel der Erfindung ist die Schaffung einer Ladevorrichtung der eingangs beschriebenen Art, die eine größere Vielseitigkeit bei der Bearbeitung ermöglicht und die es erlaubt, das Werkstück während der Bearbeitung alternativ auf eine obere oder auf eine untere Fläche zu beziehen, ohne daß die Struktur der Ladevorrichtung hierbei Beschränkungen auferlegt.

Dieses Ziel wird bei der Vorrichtung gemäß der Erfindung dadurch erreicht, daß die Mittel zum Einspannen des Werkstücks ein erstes bewegliches Spannelement umfassen, das von unten nach oben wirkt, sowie einen oberen Anschlag, der von oben nach unten in Richtung auf das bewegliche Spannelement bewegbar ist. Auf diese Weise wird das Werkstück gegen den oberen Anschlag eingespannt, indem das untere bewegliche Spannelement nach oben bewegt wird, wenn die bearbeitete Fläche des Werkstücks, auf die die nachfolgenden Bearbeitungsvorgänge bezogen werden müssen, diejenige ist, die sich oben befindet. Wenn umgekehrt die Bezugsfläche diejenige ist, die nach unten weist, kann die Vorrichtung das Werkstück mit Hilfe des beweglichen oberen Anschlags, der in diesem Fall als Einspannmittel dient, gegen das untere Spannelement einspannen.

Da das untere Spannelement beweglich ist, kann es stets aus der Bewegungsbahn, auf der das Werkstück zugeführt wird, herausgezogen und erst dann in seine Arbeitsposition geführt werden, wenn das Werkstück von den Überführungsmitteln in seine Endstellung verbracht worden ist. Dies bringt bei einer verbesserten Ausführungsform der Vorrichtung gemäß der Erfindung den weiteren wichtigen Vorteil mit sich, daß das Werkstück auf einer optimalen Bewegungbahn zugeführt werden kann, d.h. einer Bewegungsbahn, die nicht parallel zur unterstützungsebene des Werkstücks verläuft.

Bei einer besonders vorteilhaften Ausführungsform der Vorrichtung gemäß der Erfindung beaufschlagen die Mittel zum Entnehmen des Werkstücks aus dem Magazin und zu seiner Überführung in die Bearbeitungszone das Werkstück mit einer Rotations-Translations-Bewegung. Auf diese Weise kann man das Magazin mit optimaler Neigung anordnen, so daß abrupte Beschleunigungen des Werkstücks auf seinem Übertragungsweg von dem Magazin zu der Bearbeitungszone vermieden werden.

Bei einer praktischen Ausführungsform umfassen die Mittel zum Entnehmen und Überführen des Werkstücks einen Schlitten, der längs einer gegenüber der Horizontalen geneigten geradlinigen Bewegungsbahn bewegbar ist, wobei auf diesem Schlitten ein Werkstückhalter angeordnet ist, der um eine von dem Schlitten getragene horizontale Achse verschwenkbar ist. Vorteilhafterweise wird der drehbare Werkstückhalter am Ende der geradlinigen Bewegungsbahnsfrecke des Schlittens gedreht. Anstelle eines schwenkbaren Halters und eines längs einer geradlinigen Bewegungsbahn bewegbaren Schlitten (der derzeit die vorteilhafteste Lösung darstellt) kann auch ein Schlitten vorgesehen sein, der längs einer Führung bewegbar ist, die so ausgebildet ist, daß der Schlitten der gewünschten Bewegungsbahn folgt, insbesondere einer Bewegungsbahn mit einem geradlinigen Abschnitt, der in einer gekrümmten Zone endet, in der das Werkstück die endgültige Drehung erfährt.

Der Bewegungshub des Schlittens wird vorteilhafterweise von einem Pleuel-Kurbel-System gesteuert.

Auf diese Weise ist es möglich, daß das Werkstück praktisch mit der Geschwindigkeit Null in der Bearbeitungszone ankommt, so daß ein Anstoßen des Werkstücks gegen den Endanschlag verhindert wird.

Wenn die Vorrichtung zwei Beladerhälften aufweist, auf denen die Mittel zum Entnehmen und Überführen des Werkstücks, die Einspannmittel und die Entlademittel angeordnet sind, ist das Spannelement jeder der Beladerhälften vorzugsweise in der Breitenausdehnung der betreffenden Beladerhälfte enthalten. Das Spannelement kann auch in den durch den Grundriß des in Bearbeitung befindlichen Werkstücks bestimmten Raum enthalten sein und höchstens in Richtung auf die Zone hinausragen, in der sich das Magazin für die Werkstücke befindet. Da auf diese Weise der Raumbedarf für die Einspannmittel verkleinert wird, kann der Einschlagwinkel für die Zapfen, die mit der Maschine hergestellt werden können, erheblich vergrößert und die minimale Länge der Werkstücke, die mit gedrehten Zapfen bearbeitet werden können, verkleinert werden.

Zum besseren Verständnis der Erfindung sei im folgenden ein praktisches Ausführungsbeispiel anhand der Zeichnungen erläutert.
Fig. 1 zeigt die schematische Darstellung einer Zapfenschneidemaschine mit zwei einander gegenüberliegenden Bearbeitungseinheiten, die mit einer Ladevorrichtung gemäß der Erfindung ausgestattet ist,
Fig. 2 zeigt eine Ansicht einer der beiden Hälften des Beladers mit den Mitteln zur Zuführung des zu bearbeitenden Werkstücks in verschiedenen Positionen,
Fig. 3 zeigt eine Draufsicht des Beladers.

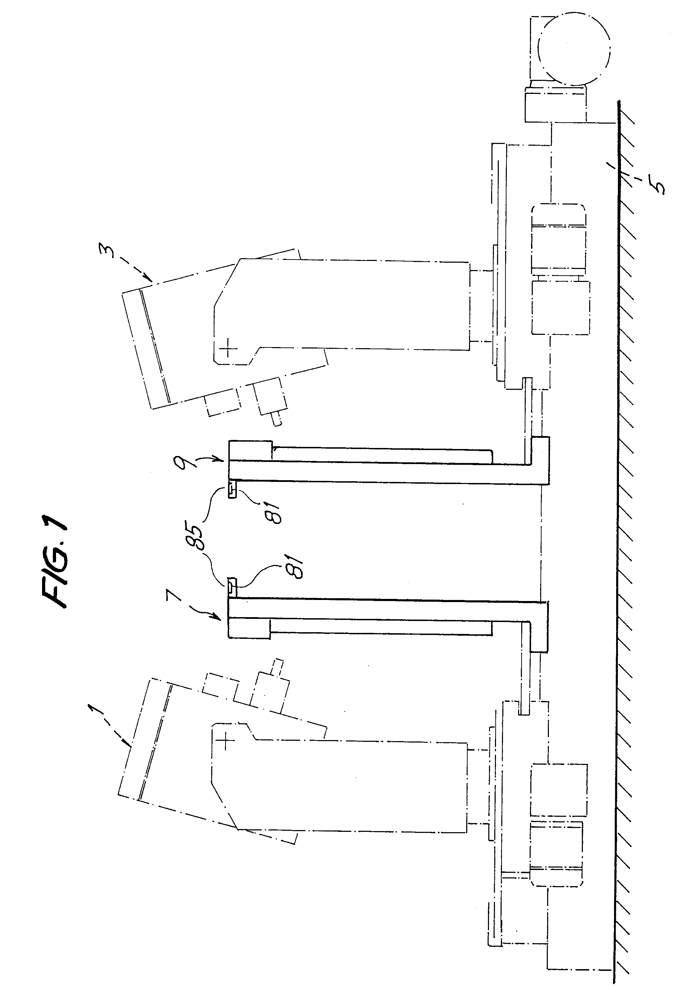

In Fig. 1 ist eine Zapfenschneidemaschine schematisch dargestellt, die zwei Bearbeitungsköpfe 1, 3, besitzt, die an einem Grundgestell 5 montiert sind. An dem Grundgestell 5 sind Gleitführungen für die Einstellung des Abstands zwischen den Köpfen 1, 3, vorgesehen. Zwischen den Arbeitsköpfen befinden sich zwei im wesentlichen symmetrische Beladerhälften 7 und 9, die zusammen die Ladevorrichtung gemäß vorliegender Erfindung bilden. Die folgende Beschreibung bezieht sich auf nur eine dieser Beladerhälften, da die andere im wesentlichen symmetrisch hierzu ausgebildet ist. Es versteht sich deshalb, daß die für eine Beladerhälfte beschriebenen Mittel in symmetrischer Anordnung auch bei der anderen Beladerhälfte vorgesehen sind.

Die Beladerhälfte besitzt eine auf den Führungen 13, 15 des Grundgestells 5 der Zapfenschneidemaschine montierte Seitenwand 11. Parallel zu dem Grundgestell 5 der Maschine verläuft eine Antriebsstange 17, die zu dem im folgenden beschriebenen Zweck mit einem pneumatischen Zylinder-Kolbensystem 19 verbunden ist, das sie mit einer Schwingbewegung um ihre eigene Achse beaufschlagt. Die Größe dieser Schwingbewegung entspricht einem Winkel β.

Auf die Stange 17 ist eine Kurbel 21 aufgekeilt, die in 23 mit einer Pleuelstange 25 gelenkig verbunden ist. Letztere ist ihrerseits in 27 mit einem Schlitten gelenkig verbunden, der insgesamt mit 29 bezeichnet ist. Dieser Schlitten ist längs einer geradlinigen Führung 31 bewegbar. Die Führung 31 ist gegenüber der Horizontalen geneigt und erstreckt sich von der Zone unter einem Magazin 33, in der die zu bearbeitenden Werkstücke P1 angeordnet sind, zu einer Zone für die Bearbeitung des Werkstücks. In dieser befinden sich die Mittel zum Einspannen des Werkstücks, die weiter unten im einzelnen dargestellt werden. In Fig. 1 sind drei Positionen des Schlittens 29 dargestellt, nämlich in gestrichtelten bzw. strichpunktierten Linien die Ausgangsposition im Bereich des Magazins 33 bzw. eine Zwischenposition, und in durchgezogenen Linien die Endposition, bei der sich das Werkstück in seiner Arbeitsstellung P2 befindet. Auf dem Schlitten 29 befindet sich ein Halter 35, der mit dem Schlitten gelenkig verbunden ist. Die Gelenkachse ist mit 37 bezeichnet. Der Halter 35 ist an einem Bügel 39 befestigt, der mit dem ersten Ende eines elastischen Stoßorgans 41 verbunden ist, dessen zweites Ende in 43 an einem Ansatz 45 des Schlittens 29 verankert ist. Das elastische Organ 41 spannt den Halter 35 im uhrzeigersinn vor, so daß die Unterstützungsebene 45P des Halters parallel zur Führung 31 gehalten wird. Das zu bearbeitende Werkstück wird mit Hilfe des Schlittens 29 an der Unterseite des Magazins 33 entnommen und auf der Unterstützungsebene 35P des Halters 35 angeordnet. An diesem Halter ist ein einstellbarer Anschlag 49 vorgesehen, an dem das aus dem Magazin 33 kommende Werkstück P1 zur Anlage kommt. Eine mit einem Betätigungsglied 53 verbundene Nase 51 blockiert das Werkstück P1 in seiner Position auf dem Halter 35.

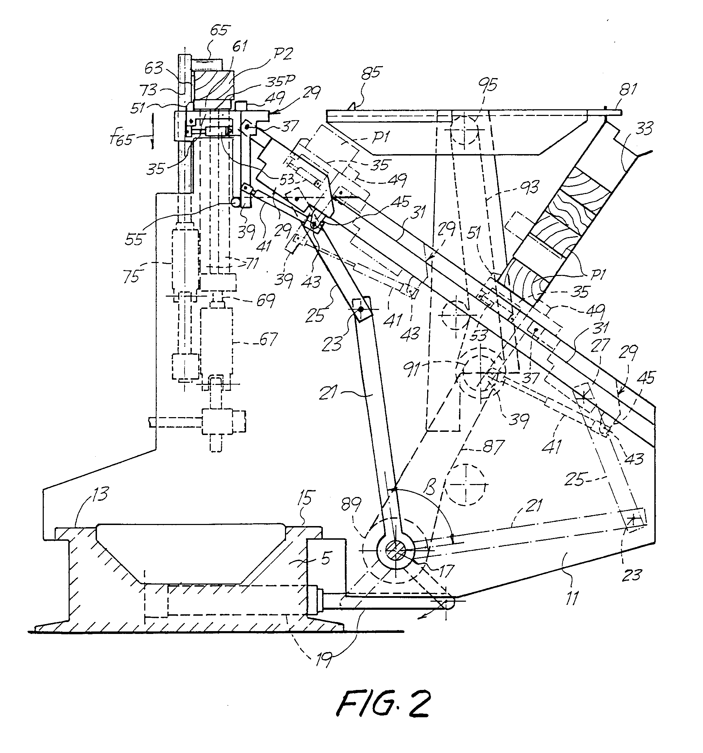

Wie aus Fig. 2 hervorgeht, ist der Bügel 39 in der Praxis direkt in 37 an dem Schlitten 29 angelenkt, während der Halter 35 an dem Bügel 39 so festgelegt ist, daß er in seiner Höhe verstellt werden kann. Man hat so die Möglichkeit, die Position der Stützfläche für das Werkstück relativ zu der Rotationsachse zu ändern und das Werkstück mit verschiedenen Neigungen zu positionieren, da die Halter 35 der beiden Beladerhälften unabhängig voneinander eingestellt werden können.

Wie aus Fig. 2 klar erkennbar ist, wird das von dem Schlitten 29 aufgenommene Werkstück P2 (durch eine Drehung der Kurbel 21 um den Winkel β) in Richtung auf die Bearbeitungszone bewegt. Im letzten Abschnitt der Hubbewegung des Schlittens 29 längs der geradlinigen Führung 31 kommt der Bügel 39 des Halters 35 mit einem festen Anschlag 55 in Berührung, so daß der Halter 35 im letzten Teil seiner eigenen Bewegungsbahn seine Translationsbewegung in der durch die Führung 31 bestimmten Richtung fortsetzt und gleichzeitig um die Achse 37 gedreht wird, bis er die Unterstützungsebene 35P in eine im wesentlichen horizontale Position bringt. Diese Stellung wird erreicht, wenn das Pleuel-Kurbel-System 21, 25, seinen oberen Totpunkt erreicht hat.

Im oberen Bereich der Beladerhälfte ist ein unteres Spannelement 61 vorgesehen, das von unten nach oben auf das Werkstück P2 in der Bearbeitungsposition einwirkt. Durch eine vertikale Absenkbewegung des Spannelements 61 wird dieses während der Bewegungsphase aus der Rotations-Translations-Bewegungsbahn des Werkstücks herausgeführt. Sobald der Halter 35 seine Endposition erreicht , in der er das zu bearbeitende Werkstück gegen einen vorderen Anschlag 63 verbringt, wird das Spannelement 61 nach oben verschoben, um das Werkstück P2 gegen einen oberen Anschlag 65 einzuspannen. Die Bewegung des Spannelements 61 wird durch ein Betätigungsglied in Form einer Zylinder-Kolben-Anordnung 67 gesteuert, deren Kolbenstange 69 mit zwei Säulen 71 verbunden ist, die oben an dem Spannelement 61 befestigt sind.

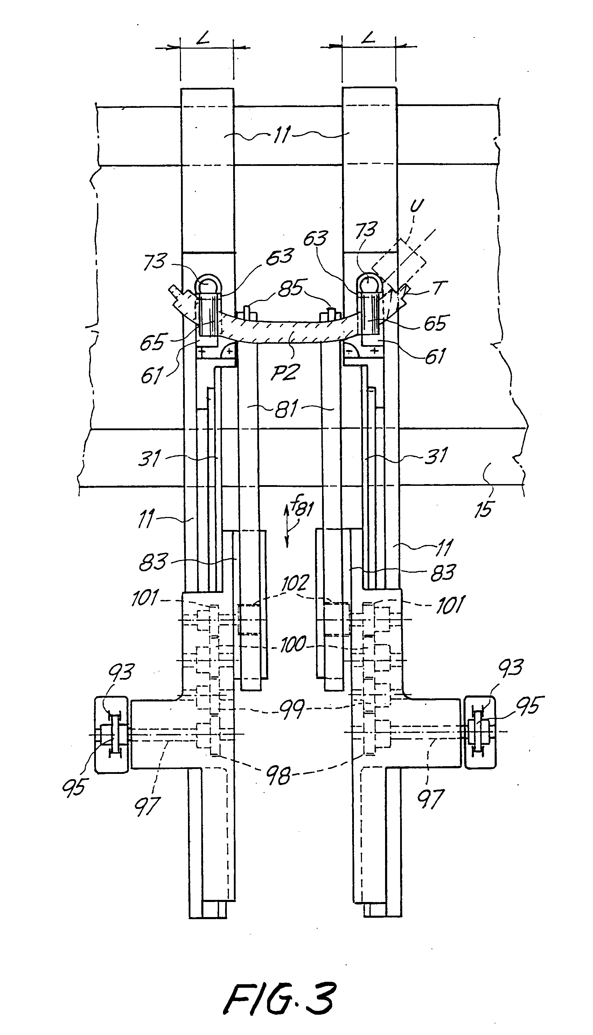

Wie insbesondere aus der Draufsicht von Fig. 3 erkennbar ist, sind das Spannelement 61 und der obere Anschlag 65 vollständig in der Breitenausdehnung L der Beladerhälfte und in dem Raum des Werkstücks P2 enthalten, wenn dieses sich in der Bearbeitungsposition befindet. Sie ragen lediglich teilweise in Richtung auf das Magazin 33 über das Werkstück hinaus. Auf diese Weise kann das Werkzeug U des betreffenden Kopfes der Zapfenschneidemaschine, der in der Zeichnungsfigur in gestrichelten Linien angedeutet ist, auch solche Zapfen T bearbeiten, die relativ zur Längsausdehnung des Werkstücks stark geneigt sind, da die Einspannmittel die Bearbeitungszone nicht verstellen. Der von dem oberen Anschlag eingenommene Raum kann ggf. gegenüber der Darstellung von Fig. 3 weiter verkleinert werden.

Der obere Anschlag 65 kann feststehend sein. Bei dem in der Zeichnung dargestellten Beispiel ist er jedoch so ausgebildet, daß er zum Zusammenwirken mit dem Spannelement 61 nach unten bewegt werden kann. Zu diesem Zweck ist der obere Anschlag 65 von einer Säule 73 getragen, die unten mit einem Zylinder-Kolben-Antriebsglied 75 verbunden ist. Wenn man mit festem oberen Anschlag arbeiten möchte, wird das Betätigungsglied 75 blockiert. Wenn man umgekehrt mit beweglichem oberen Anschlag arbeiten möchte, wird das Betätigungsglied 75 so gesteuert, daß es den Anschlag in Richtung des Doppelpfeiles f65 verschiebt.

Zum Entladen des bearbeiteten Werkstücks ist an jeder Beladerhälfte ein an sich bekanntes System vorgesehen, das aus einem in Richtung des Doppelpfeiles f1 in einer Führung 83 bewegbaren Stange 81 besteht, die mit einer mit der Bewegung des Schlittens 29 synchronisierten Bewegung beaufschlagt wird. Die Stange 81 besitzt an ihrer Stirnseite eine Nase 85, die elastisch so vorgespannt ist, daß sie oben über die Stange 81 hinausragt. Wenn das Werkstück sich in der Bearbeitungsposition P2 befindet, wird der Schlitten 29 durch eine Drehung der Stange 17 im Uhrzeigersinn weggeführt. Diese Bewegung bewirkt (in der weiter unten beschriebenen Weise) einen Vorschub der Stange 81, deren mit der Nase 85 ausgestattetes Ende daraufhin unter das Werkstück P2 verbracht wird. Während der Gleitbewegung der Stange unter dem Werkstück wird die Nase 85 von der Unterseite des Werkstücks weggedrückt, so daß sie ausgerückt wird. Sobald sie das Werkstück überschreitet, wird sie durch die Wirkung einer (nicht dargestellten) Kompressionsfeder zurückgeführt, so daß sie wieder über die Stange hinausragt. Wenn die Bearbeitung des Werkstücks beendet ist, wird die Stange 81 zurückgezogen, nachdem sich das Spannelement 61 abgesenkt und das bearbeitete Werkstück freigegeben hat. Die Nase 85 ergreift dann das Werkstück und zieht es weg.

Die alternierende Bewegung der Stange 81 wird über eine Kette 87 von der Bewegung der Stange 17 abgeleitet. Die Kette 87 überträgt die Bewegung von einem auf der Stange 17 aufgekeilten Zahnkranz 89 zu einem Zahnritzel 91. Von diesem wird die Bewegung über eine weitere Kette 93 zu einem Zahnritzel 95 übertragen, das auf einer Welle 97 aufgekeilt ist. Von der Welle 97 wird die Bewegung über eine Folge von Zahnrädern 98, 99, 100, 101, 102, von denen das letzte mit einer mit der Stange 81 fest verbundenen Zahnstange in Eingriff steht, auf die Stange 81 übertragen. Die mechanische Verbindung mit der Stange 17, die auch die Bewegung des Schlittens 29 steuert, gewährleistet Synchronizität zwischen der Bewegung des Schlittens 29 (d.h. der Mittel zur Zuführung des zu bearbeitenden Werkstücks) und der Stange 81 (d.h. der Mittel zum Entladen des bearbeiteten Werkstücks).

Die Zeichnung zeigt selbstverständlich nur ein Ausführungsbeispiel, das lediglich zur praktischen Demonstration der Erfindung dient. Die Erfindung kann in ihren Formen und Anordnungen verändert werden, ohne daß damit das ihr zugrundeliegende Konzept verlassen wird. Die eventuelle Verwendung von Bezugszeichen in den anliegenden Ansprüchen soll die Lektüre der Ansprüche unter Bezugnahme auf die Beschreibung und die Zeichnungen erleichtern und beschränkt den durch die Ansprüche definierten Schutzumfang nicht.

## Patentansprüche

1. Vorrichtung zum Laden von zu bearbeitenden Werkstücken auf eine Zapfenschneidemaschine oder dergleichen und zum Entladen von bearbeiteten Werkstücken aus der Maschine, mit einem Magazin (33) für zu bearbeitende Werkstücke, Mitteln (29, 35) zum Entnehmen des Werkstücks (P1) aus dem Magazin (33) und zum Überführen des Werkstücks auf eine Unterstützungsebene für die Bearbeitung des Werkstücks, Mitteln (61, 65) zum Einspannen des Werkstücks während der Bearbeitung und Mitteln (81, 85) zum Entladen des Werkstücks, **dadurch gekennzeichnet**, daß die Mittel (61, 62) zum Einspannen des Werkstücks (P1) ein erstes bewegliches Spannelement (61) umfassen, das von unten nach oben wirkt, sowie einen oberen Anschlag (65), der von oben nach unten in Richtung auf das bewegliche Spannelement bewegbar ist.

2. Vorrichtung nach Anspruch 1, dadurch gekennzeichnet, daß die Mittel zum Entnehmen und Überführen des Werkstücks das zu bearbeitende Werkstück (P1) auf einer zu der Unterstützungsebene nicht parallelen Bewegungsbahn führen.

3. Vorrichtung nach Anspruch 1 oder 2, dadurch gekennzeichnet, daß die Mittel (29, 35) zum Entnehmen des Werkstücks (P1) aus dem Magazin und zum überführen des Werkstücks von dem Magazin zu der Unterstützungsebene das Werkstück mit einer Rotations-Translationsbewegung beaufschlagen.

4. Vorrichtung nach Anspruch 3, dadurch gekennzeichnet, daß die Mittel (29, 35) zum Entnehmen und Überführen des Werkstücks einen Schlitten (29) umfassen, der längs einer gegenüber der Horizontalen geneigten geradlinigen Bewegungsbahn bewegbar ist, und daß auf diesem Schlitten ein Werkstückhalter (35) angeordnet ist, der um eine von dem Schlitten getragene horizontale Achse (37) bewegbar ist.

5. Vorrichtung nach Anspruch 4, dadurch gekennzeichnet, daß der drehbare Werkstückhalter (35) im Endbereich der geradlinigen Bewegungsbahn des Schlittens (29) gedreht wird.

6. Vorrichtung nach einem oder mehreren der Ansprüch 3 bis 5, dadurch gekennzeichnet, daß der Bewegungshub des Schlittens (29) durch ein Pleuel-Kurbel-System gesteuert wird.

7. Vorrichtung nach einem der Ansprüche 1 bis 6, dadurch gekennzeichnet, daß sie zwei Beladerhälften (7, 9) mit einstellbarem Zwischenabstand aufweist und daß die genannten Mittel (29, 35) zum Entnehmen und Überführen des Werkstücks, die Einspannmittel (31, 65) und die Entlademittel (81, 85) an jeder dieser Beladerhälften angeordnet sind.

8. Vorrichtung nach Anspruch 7, dadurch gekennzeichnet, daß das Spannelement (61) jeder der Beladerhälften (7, 9) in der Breitenausdehnung (L) in der betreffenden Beladerhälfte enthalten ist.

9. Vorrichtung nach Anspruch 8, dadurch gekennzeichnet, daß das Spannelement (61) in dem von dem Grundriß des in Bearbeitung befindlichen Werkstücks (P2) bestimmten Raum enthalten ist und höchstens in Richtung auf die Zone des Magazins( 33) hervorsteht.

10. Vorrichtung nach einem oder mehreren der Ansprüche 1 bis 9, dadurch gekennzeichnet, daß sie eine Führung mit einem geradlinigen Abschnitt und einem gekrümmten Endabschnitt sowie einen Schlitten aufweist, der zum transportieren des Werkstücks längs dieser Führung bewegbar ist.

11. Vorrichtung nach einem oder mehreren der vorhergehenden Ansprüche, dadurch gekennzeichnet, daß die Mittel (29, 35) zum Entnehmen des Werkstücks (P1) eine Ebene (35P) zur Unterstützung des Werkstücks aufweisen, deren Position relativ zu der Bewegungsbahn dieser Mittel verstellbar ist.

## Claims

1. Apparatus for loading workpieces to be machined onto a tenon cutting machine or the like and for unloading machined workpieces from the machine, said apparatus comprising a magazine (33) for workpieces to be machined, means (29, 35) for extracting the workpiece (P1) from the magazine (33) and for transferring the workpiece onto a support plane for the machining of the workpiece, means (61, 65) for clamping the workpiece during the machining and means (81, 85) for unloading the workpiece, characterized in that the means (61, 62) for clamping the workpiece (P1) comprise a first movable clamp element (61), which acts from below upwards, and a top stop (65) which is movable from above downwards in the direction of the movable clamp element.

2. Apparatus according to Claim 1, characterized in that the means for extracting and transferring the workpiece guide the workpiece (P1) to be machined on a movement path which is not parallel to the support plane.

3. Apparatus according to Claim 1 or 2, characterized in that the means (29, 35) for extracting the workpiece (P1) from the magazine and for transferring the workpiece from the magazine to the support plane subject the workpiece to a rotational and translational movement.

4. Apparatus according to Claim 3, characterized in that the means (29, 35) for extracting and transferring the workpiece comprise a slide (29) which is movable along a rectilinear path of movement inclined relative to the horizontal, and in that on said slide a workpiece holder (35) is arranged which is movable about a horizontal axis (37) carried by the slide.

5. Apparatus according to Claim 4, characterized in that the rotatable workpiece holder (35) is turned in the end region of the rectilinear path of movement of the slide (29).

6. Apparatus according to one or more of Claims 3 to 5, characterized in that the movement stroke of the slide (29) is controlled by a connecting rod and crank system.

7. Apparatus according to one of Claims 1 to 6, characterized in that it has two loader halves (7, 9) with an adjustable distance between them, and in that said means (29, 35) for extracting and transferring the workpiece, the clamp means (31, 65) and the unloading means (81, 85) are arranged on each of said loader halves.

8. Apparatus according to Claim 7, characterized in that the clamp element (61) of each of the loader halves (7, 9) is contained within the width dimension (L) in the respective loader half.

9. Apparatus according to Claim 8, characterized in that the clamp element (61) is contained in the space defined by the plan of the workpiece (P2) being machined and at most projects in the direction of the zone of the magazine (33).

10. Apparatus according to one or more of Claims 1 to 9, characterized in that it has a guide comprising a rectilinear portion and a curved end portion and also has a slide which is movable along said guide in order to convey the workpiece.

11. Apparatus according to one or more of the preceding claims, characterized in that the means (29, 35) for extracting the workpiece (P1) have, for the support of the workpiece, a plane (35P) the position of which relative to the path of movement of said means is adjustable.

## Revendications

1. Dispositif de chargement de pièces à usiner sur une machine à tenons ou analogue et de déchargement des pièces usinées de la machine, comprenant un magasin (33) des pièces à usiner, des moyens (29, 35) de prélèvement de la pièce (P1) sur la magasin (33) et de transfert de la pièce sur un plan de soutien pour l'usinage de la pièce, des moyens (61, 65) de fixation de la pièce pendant l'usinage et des moyens (81, 85) de déchargement de la pièce, caractérisé en ce que les moyens (61, 62) de fixation de la pièce (P1) comprennent un premier élément mobile de fixation (61) qui agit du bas vers le haut, ainsi qu'une butée supérieure (65) qui est déplaçable du haut vers le bas et vers l'élément mobile de fixation.

2. Dispositif selon la revendication 1, caractérisé en ce que les moyens de prélèvement et de transfert de la pièce guident la pièce à usiner (P1) sur une voie de déplacement qui n'est pas parallèle au plan de soutien.

3. Dispositif selon la revendication 1 ou 2, caractérisé en ce que les moyens (29, 35) de prélèvement de la pièce (P1) sur le magasin et de transfert de la pièce du magasin sur le plan de soutien font subir à la pièce un mouvement de rotation et de translation.

4. Dispositif selon la revendication 3, caractérisé en ce que les moyens (29, 35) de prélèvement et de transfert de la pièce comprennent une chariot (29) qui est déplaçable le long d'une voie de mouvement rectiligne qui est inclinée sur l'horizontale et en ce qu'un porte-pièce (35) disposé sur ce chariot est déplaçable autour d'un axe horizontal (37) porté par le chariot.

5. Dispositif selon la revendication 4, caractérisé en ce que le porte-pièce rotatif (35) subit une rotation dans la partie extrême de la voie rectiligne de mouvement du chariot (29).

6. Dispositif selon l'une ou plusieurs des revendications 3 à 5, caractérisé en ce que la course de déplacement du chariot (29) est commandée par un système à bielle et manivelle.

7. Dispositif selon l'une des revendications 1 à 6, caractérisé en ce qu'il comprend deux moitiés de chargeur (7, 9) dont l'espace intermédiaire qui les sépare est réglable et en ce que lesdits moyens (29, 35) de prélèvement et de transfert de la pièce, les moyens de fixation (31, 65) et les moyens de déchargement (81, 85) sont disposés sur chacune de ces moitiés de chargeur.

8. Dispositif selon la revendication 7, caractérisé en ce que l'élément de fixation (61) de chacune des moitiés de chargeur (7, 9) est logé, à l'intérieur de la dimension en largeur (L), dans la moitié correspondante de chargeur.

9. Dispositif selon la revendication 8, caractérisé en ce que l'élément de fixation (61) est logé dans l'espace déterminé par la projection sur un plan horizontal de la pièce (P2) se trouvant en cours d'usinage et déborde tout au plus vers la zone du magasin (33).

10. Dispositif selon l'une ou plusieurs des revendications 1 à 9, caractérisé en ce qu'il comprend un guide comportant une section rectiligne et une partie extrême courbe, ainsi qu'un chariot qui est déplaçable le long de ce guide pour le transport de la pièce.

11. Dispositif selon l'une ou plusieurs des revendications précédentes, caractérisé en ce que les moyens (29, 35) de prélèvement de la pièce (P1) comprennent un plan (35P) de soutien de la pièce, dont la position est réglable par rapport à la voie de déplacement de ces moyens.
